# EUROPÄISCHE PATENTANMELDUNG

(11) **EP 4 043 742 A1**
(43) Veröffentlichungstag der Anmeldung: **17.08.2022**
(21) Anmeldenummer: 21157288.8
(22) Anmeldetag: 16.02.2021
(51) Int. Cl.: F16C 17/02, F16C 17/04, F16C 17/06, F16C 17/03, F16C 17/18, F16C 25/04

(54) **LAGERANORDNUNG**

(71) Anmelder: Siemens Energy Global GmbH & Co. KG, 81739 München (DE)
(72) Erfinder: Bock, Dennis, 47506 Neukirchen-Vluyn (DE); Nissler, Joachim, 47137 Duisburg (DE)

(57) **Zusammenfassung**

Die Erfindung betrifft eine Lageranordnung (1) umfassend einen ersten Lagerkörper (2) und einen zweiten Lagerkörper (3), wobei der zweite Lagerkörper (3) relativ zum ersten Lagerkörper (2) verschiebbar angeordnet ist, wobei zwischen dem ersten Lagerkörper (2) und dem zweiten Lagerkörper (3) ein Lagerspalt (4) ausgebildet ist, wobei in dem Lagerspalt (4) ein Schmiermedium angeordnet ist, gekennzeichnet durch einen Lagerstein (5), der im Lagerspalt (4) bewegbar angeordnet ist, wobei der Lagerstein (5) derart ausgebildet ist, dass die Bewegung des zweiten Lagerkörpers (3) zu einer Mitbewegung des Lagersteins (5) führt.

## Beschreibung

Die Erfindung betrifft eine Lageranordnung umfassend einen ersten Lagerkörper und einen zweiten Lagerkörper, wobei der zweite Lagerkörper relativ zum ersten Lagerkörper verschiebbar angeordnet ist, wobei zwischen dem ersten Lagerkörper und dem zweiten Lagerkörper ein Lagerspalt ausgebildet ist, wobei in dem Lagerspalt ein Schmiermedium angeordnet ist.

Sowohl in Radial- als auch in Axialgleitlagern werden im Betrieb mechanische Verluste verursacht. Diese steigen mit zunehmender Lager-Gleitgeschwindigkeit stark nichtlinear an. Allerdings erfordern steigende Leistungsverdichtungen in den Maschinen höhere Drehzahlen und größere Lagerdurchmesser. Dadurch sind höhere Lager-Gleitgeschwindigkeiten notwendig.

Die Folge ist, dass dadurch auch die Verlustleistungen der Maschinen in Bezug auf die Gleitlagerungen stark nichtlinear ansteigen. Zudem gibt es für die verschiedenen Gleitlagertypen Grenzwerte für die Lager-Gleitgeschwindigkeiten. Das steht dem Bestreben der Leistungsverdichtung zu der höhere Lager-Gleitgeschwindigkeiten notwendig werden, entgegen.

Der obere Grenzwert der Gleitgeschwindigkeit führt dazu, dass die technische Umsetzung von Verdichtern verhindert wird.

Bekannt sind so genannte "Floating Ring Bearings", die in Turboladern teilweise eingesetzt werden. Bei dieser Konstruktion wird zwischen dem feststehenden Außenring des Lagers und der rotierenden Welle ein zweiter komplett am Umfang geschlossener Ring, der mit einer geringeren Geschwindigkeit als die Welle umläuft, eingesetzt.

Aufgabe der Erfindung ist es eine verbesserte Lageranordnung anzugeben.

Gelöst wird diese Aufgabe durch eine Lageranordnung umfassend einen ersten Lagerkörper und einen zweiten Lagerkörper, wobei der zweite Lagerkörper relativ zum ersten Lagerkörper verschiebbar angeordnet ist, wobei zwischen dem ersten Lagerkörper und dem zweiten Lagerkörper ein Lagerspalt ausgebildet ist,
wobei in dem Lagerspalt ein Schmiermedium angeordnet ist, mit einem Lagerstein, der im Lagerspalt bewegbar angeordnet ist, wobei der Lagerstein derart ausgebildet ist, dass die Bewegung des zweiten Lagerkörpers zu einer Mitbewegung des Lagersteins führt. Zweckmäßig werden mehrere Lagersteine in Umfangsrichtung angeordnet.

Erfindungsgemäß wird somit vorgeschlagen einen Lagerstein vorzuschlagen, der nicht im Lagergehäuse befestigt ist und radial frei beweglich angeordnet ist. Der Lagerkörper ist hierbei als Lagergehäuse ausgebildet.

Die Lagersteine laufen im Betrieb des Lagers mit einer Geschwindigkeit die kleiner ist als die Wellendrehzahl, da sie von der Welle mitgeschleppt werden.

Vorteilhafterweise kann die erfindungsgemäße Lageranordnung sowohl für Radial- als auch für Axiallager eingesetzt werden.

Es ist als wichtig zu betrachten, dass die Abstände im Lagerspalt in radialer Richtung sicherzustellen sind.

Ebenso ist es wichtig, die Abstände zwischen den Lagersteinen in Umfangsrichtung sicherzustellen. Idealerweise sollte der Abstand zwischen den Lagersteinen gleich sein.

Dazu kann ein Käfig eingesetzt werden, der die Lagersteine umschließt.

Eine weitere Möglichkeit besteht darin, die Lagersteine mit einem Verbindungselement zu verschrauben.

Zudem ist es als weitere Variante möglich, die Lagersteine derart länglich auszubilden, dass diese sich in der Umfangsrichtung berühren und dadurch eine starre Fixierung aufweisen und sich gegenseitig abstützen.

Eine weitere Variante kann durch den Einsatz von Zwischenstücken zwischen den einzelnen Lagersteinen erfolgen.

In weiteren Ausgestaltungen der Lageranordnung kann durch eine Formgebung der Lagersteine und des Lagergehäuses eine Verschiebesicherung der Lagersteine erreicht werden. Diese Verschiebesicherung wird durch eine formschlüssige Verbindung erreicht.

Eine weitere Variante sieht vor, dass der Lagerstein und das Lagergehäuse mit einer Kugelabschnittsform ausgebildet werden.

In einer weiteren Variante sind die Lagersteine und das Lagergehäuse wellenförmig zueinander ausgebildet, um eine Verschiebung zwischen dem Lagerstein und dem Lagergehäuse relativ zueinander zu verhindern.

In einer weiteren Varianten der Lageranordnung sind die Lagersteine steinförmig oder keilförmig ausgebildet. Bei keilförmigen Lagersteinen können Not-Rückwärtslauf-Flächen notwendig werden.

In einer weiteren Variante können Ölkanäle in den Lagersteinen berücksichtigt werden.

Ein technischer Effekt der erfindungsgemäßen Lageranordnung ist es, dass geringere mechanische Verlustleistungen als bei einem herkömmlichen Gleitlager auftauchen, da zwei Gleitstellen mit halber Gleitgeschwindigkeit verlustärmer als eine Gleitfläche mit voller Gleitgeschwindigkeit sind.

Ein weiterer technischer Effekt ist, dass durch zwei Schmierfilme statt einem Schmierfilm eine bessere Dämpfung erfolgt.

Ein weiterer technischer Effekt ist, dass sich nicht nur ein Schmierkeil wie bei einem "Floating Ring Bearing" ausbildet, sondern vielmehr ein Schmierkeil pro Lagerstein, die mit der Welle umlaufen.

Vorteilhafte Weiterbildungen sind in den Unteransprüchen angegeben.

So wird in einer ersten vorteilhaften Weiterbildung die Lageranordnung derart ausgebildet, dass mehrere Lagersteine hintereinander in der Bewegungsrichtung gesehen im Lagerspalt angeordnet sind, wobei die Lagersteine mittels Verbindungselemente zwischen den Lagersteinen miteinander verbunden sind.

Vorteilhafterweise wird dadurch der Abstand zwischen den Lagersteinen sichergestellt.

Vorteilhafter weise sollte die Anzahl der Lagersteine gleichmäßig über den Umfang verteilt sein, um die Tragfähigkeit der Lageranordnung sicherzustellen.

In einer weiteren vorteilhaften Weiterbildung ist das Verbindungselement seitlich in axialer Richtung gesehen der Lagersteine angeordnet, wobei das Verbindungselement mit den Lagersteinen mittels eines Befestigungsmittels verbunden ist.

Mit dieser vorteilhaften Weiterbildung wird ebenso der Abstand zwischen den Lagersteinen sichergestellt.

In einer weiteren vorteilhaften Weiterbildung sind die Lagersteine in der axialen Richtung im Querschnitt gesehen keilförmig ausgebildet.

Glatte Lagersteine bilden durch die Relativgeschwindigkeiten der Gleitflächen zueinander automatisch Schmierkeile aus. Keilförmige Lagersteine haben die Schmierkeilgeometrie schon eingearbeitet.

In einer weiteren vorteilhaften Weiterbildung sind die Lagersteine in dem Lagergehäuse derart angeordnet, dass ein Verschieben der Lagersteine gegenüber dem Lagergehäuse in axialer Richtung verhindert ist.

Dadurch werden die Lagersteine daran gehindert, sich aus dem Lager herauszubewegen.

In einer weiteren vorteilhaften Weiterbildung weisen die Lagersteine einen Verbindungskanal auf, der eine strömungstechnische Verbindung zwischen einem ersten Spalt, der zwischen dem Lagerstein und dem ersten Lagerkörper ausgebildet ist und einen zweiten Spalt, der zwischen dem Lagerstein und dem zweiten Lagerkörper ausgebildet ist, herstellt.

Durch diesen als Ölkanal ausgebildete strömungstechnische Verbindung erfolgt ein Ölaustausch zwischen der inneren und der äußeren Gleitfläche.

Ein weiterer Effekt ist, dass die mit Öl durchfluteten Lagersteine durch den Ölfluss gekühlt werden.

Im Folgenden ist die Erfindung anhand spezieller Ausführungsbeispiele unter Bezugnahme auf Zeichnungen näher erläutert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in thematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1:: eine schematische Darstellung der erfindungsgemäßen Lageranordnung
- Figur 2:: eine schematische Darstellung der erfindungsgemäßen Lageranordnung in einer alternativen Ausführungsform
- Figur 3:: eine schematische Darstellung der erfindungsgemäßen Lageranordnung in einer weiteren alternativen Ausführungsform
- Figur 4:: eine schematische Darstellung der erfindungsgemäßen Lageranordnung in einer weiteren alternativen Ausführungsform
- Figur 5:: eine schematische Darstellung der erfindungsgemäßen Lageranordnung in einer weiteren alternativen Ausführungsform
- Figur 6:: eine schematische Darstellung der erfindungsgemäßen Lageranordnung in einer weiteren alternativen Ausführungsform
- Figur 7:: eine schematische Darstellung der erfindungsgemäßen Lageranordnung in einer weiteren alternativen Ausführungsform
- Figur 8:: eine schematische Darstellung der erfindungsgemäßen Lageranordnung in einer weiteren alternativen Ausführungsform
- Figur 9:: eine schematische Darstellung der erfindungsgemäßen Lageranordnung in einer weiteren alternativen Ausführungsform
- Figur 10:: eine schematische Darstellung der erfindungsgemäßen Lageranordnung in einer weiteren alternativen Ausführungsform
- Figur 11:: eine schematische Darstellung der erfindungsgemäßen Lageranordnung in einer weiteren alternativen Ausführungsform
- Figur 12:: eine schematische Darstellung der erfindungsgemäßen Lageranordnung in einer weiteren alternativen Ausführungsform

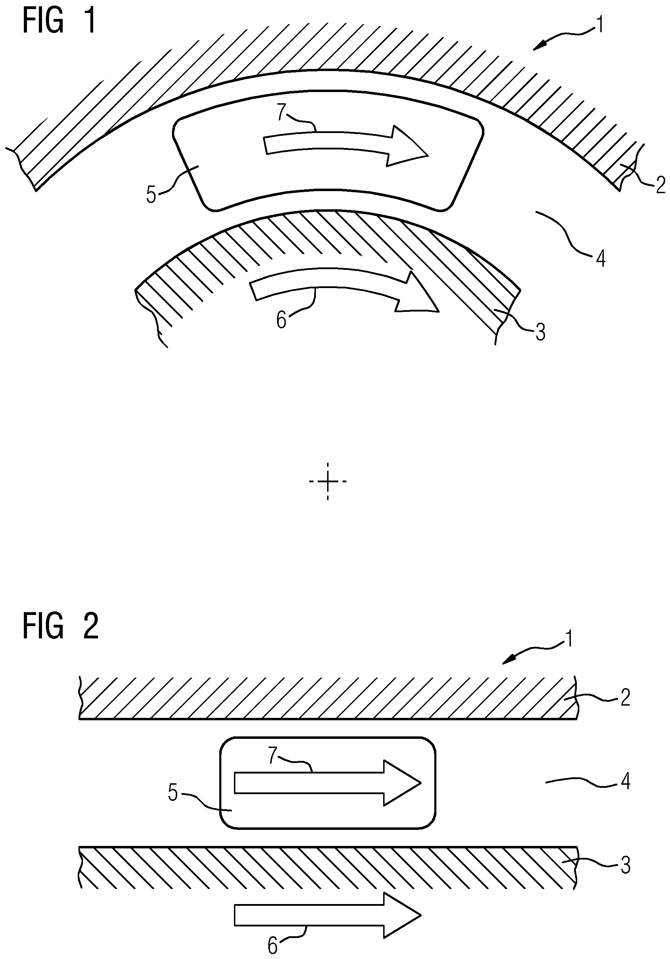

Die Figur 1 zeigt eine erfindungsgemäße Lageranordnung 1, wie sie beispielsweise in Strömungsmaschinen eingesetzt wird. Die Lageranordnung 1 umfasst einen ersten Lagerkörper 2 und einen zweiten Lagerkörper 3, wobei der zweite Lagerkörper 3 relativ zum ersten Lagerkörper 2 verschiebbar angeordnet ist.

Zwischen dem ersten Lagerkörper 2 und dem zweiten Lagerkörper 3 ist ein Lagerspalt 4 ausgebildet. In dem Lagerspalt 4 ist ein Schmiermedium angeordnet. Ein Lagerstein 5 ist in dem Lagerspalt 5 bewegbar angeordnet.

Der Lagerstein 5 ist dabei derart ausgebildet, dass die Bewegung des zweiten Lagerkörpers 3 zu einer Mitbewegung des Lagersteins 5 führt.

Die Bewegung des zweiten Lagerkörpers 3 ist durch einen ersten Pfeil 6 dargestellt, wobei die Bewegung des Lagersteins durch den zweiten Pfeil 7 dargestellt ist. Mit solch einer derartigen Lageranordnung 1 bewegt sich der Lagerstein 5 im Uhrzeigersinn um eine nicht näher dargestellte Rotationsachse.

Der zweite Lagerkörper 3 ist als Welle ausgebildet.

Der Lagerspalt 4 bildet dadurch einen rotationssymmetrischen Ringraum.

Die Figur 2 zeigt eine weitere erfindungsgemäße Ausführungsform der Lageranordnung 1. Im Unterschied zur Figur 1 ist die Lageranordnung 1 nicht um eine Rotationsachse ausgebildet, sondern vielmehr geradlinig, d.h. entlang einer Ebene.

Dabei wird der zweite Lagerkörper 3 in der Zeichenebene von links nach rechts bewegt, wobei durch die Bewegung des zweiten Lagerkörpers 3 das im Lagerspalt 4 befindliche Schmiermedium mitgezogen wird, wodurch auch der Lagerstein 5 ebenfalls mitgezogen wird und sich in der Zeichenebene ebenfalls von links nach rechts bewegt.

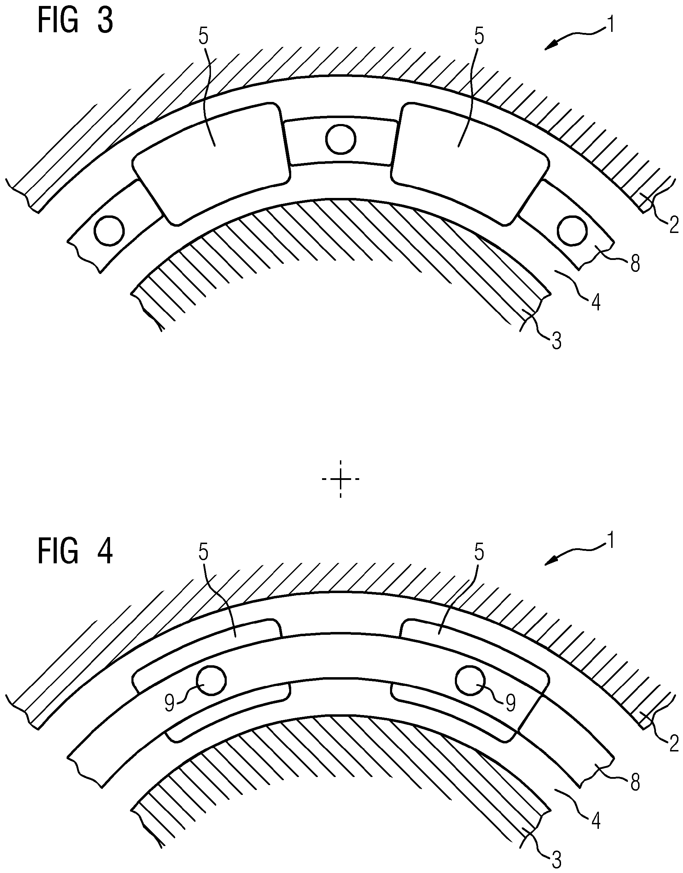

Die Figur 3 zeigt eine alternative Ausführungsform der Lageranordnung 1. In der in der Figur 3 gezeigten Ausführungsform der Lageranordnung 1 sind um eine nicht näher dargestellte Rotationsachse mehrere Lagersteine 5 angeordnet. Die Lagersteine 5 können identisch ausgebildet sein.

Es sind mehrere Lagersteine 5 hintereinander in der Bewegungsrichtung gesehen im Lagerspalt 4 angeordnet, wobei die Lagersteine 5 mittels Verbindungselemente 8 zwischen den Lagersteinen 5 miteinander verbunden sind. Die Verbindungselemente 8 verbinden jeweils zwei Lagersteine 5 miteinander. Dabei besteht eine Verbindung zwischen dem Verbindungselement 8 und dem Lagerstein 5, so dass das Verbindungselement 8 zwischen den Lagersteinen 5 angeordnet ist.

Die Figur 4 zeigt eine weitere Variante der erfindungsgemäßen Lageranordnung 1. Hierbei sind die Verbindungselemente 8 seitlich in axialer Richtung gesehen der Lagersteine 5 angeordnet ist, wobei das Verbindungselement 8 mit den Lagersteinen 5 mittels eines Befestigungsmittels 9 verbunden ist.

Das Befestigungsmittel 9 kann als Schraube oder als Stift ausgebildet sein.

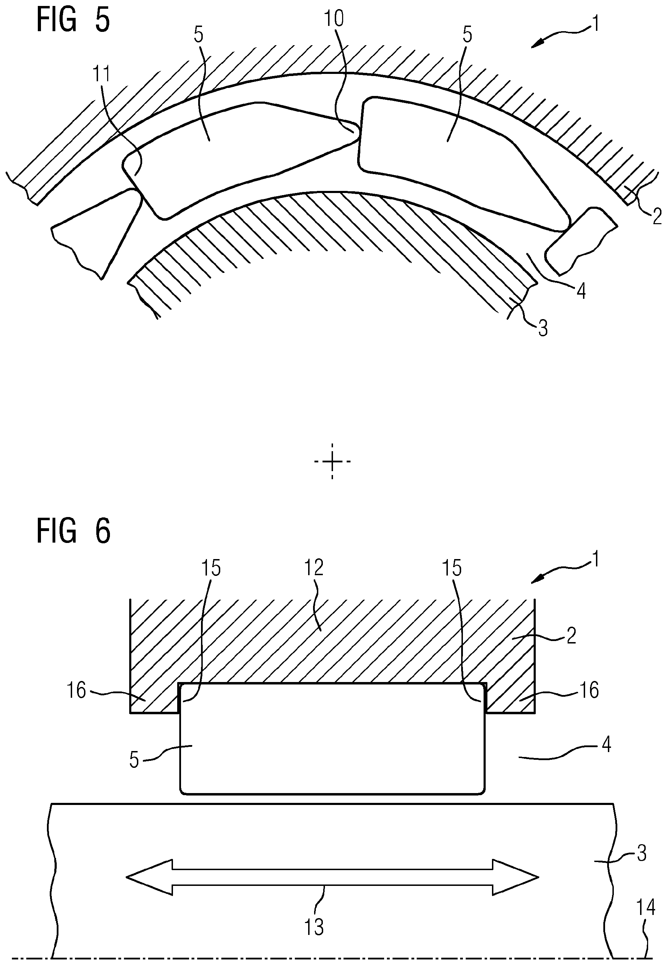

Die Figur 5 zeigt eine weitere Ausführungsform der erfindungsgemäßen Lageranordnung 1. Hierbei werden die Lagersteine 5 derart angeordnet, dass sie berührend aneinander liegen. Dazu ist ein Lagerstein 5 keilförmig ausgebildet. Somit umfasst ein Lagerstein 5 ein keilförmiges Ende 10 und ein breites gegenüberliegendes Ende 11. Das keilförmige Ende 10 eines Lagersteines 5 berührt hierbei das breite gegenüberliegende Ende 11 eines benachbarten Lagersteines 5. Die Verjüngung ist hierbei nicht zwingend keilförmig, sondern kann auch beliebig verjüngt ausgebildet sein.

Die Lagersteine 5 müssen hierbei nicht zwingend keilförmig ausgebildet sein. Eine andere Form ist ebenfalls möglich.

Die Lagersteine 5 sind in der axialen Richtung im Querschnitt gesehen keilförmig ausgebildet.

Die Figur 6 zeigt eine weitere Ausführungsform der erfindungsgemäßen Lageranordnung 1. Die Lagersteine 5 sind in dem Lagergehäuse 12 derart angeordnet sind, dass ein Verschieben der Lagersteine 5 gegenüber dem Lagergehäuse 12 in axialer Richtung 13 verhindert ist.

In der Figur 6 ist die Rotationsachse 14 dargestellt, wobei die Lageranordnung 1 um die Rotationsachse 14 ausgebildet ist.

Das Lagergehäuse 12 weist an den axialen Enden 15 der Lagersteine 5 einen Vorsprung 16 aufweist, mit dem ein axiales Verschieben des Lagersteins 5 verhindert ist.

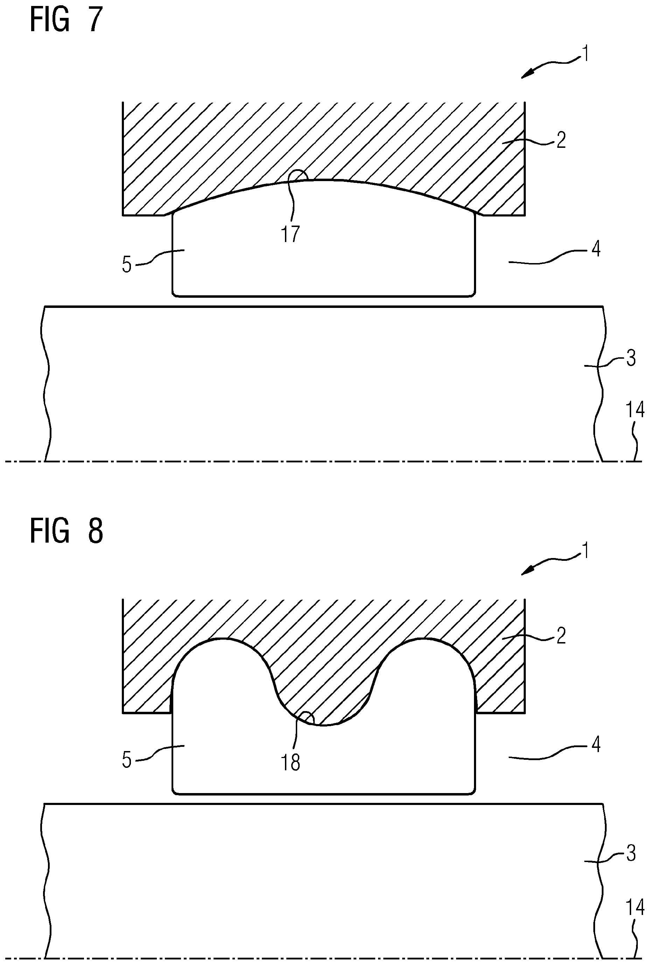

Die Figur 7 zeigt eine alternative Ausführungsform der erfindungsgemäßen Lageranordnung 1. Die Lagersteine 5 weisen in der Umfangsrichtung gesehen im Querschnitt gesehen eine sphärische oder keilförmige Fläche 17 auf, wobei das Lagergehäuse 12 eine zu der sphärischen oder keilförmigen Fläche 17 komplementäre Fläche aufweist.

Die Figur 8 zeigt eine weitere alternative Ausführungsform der erfindungsgemäßen Lageranordnung 1. Die Lagersteine 5 weisen in der Umfangsrichtung gesehen im Querschnitt gesehen eine Freifläche 18 aufweisen, wobei das Lagergehäuse 12 eine zu der Freifläche 18 komplementäre Fläche aufweist.

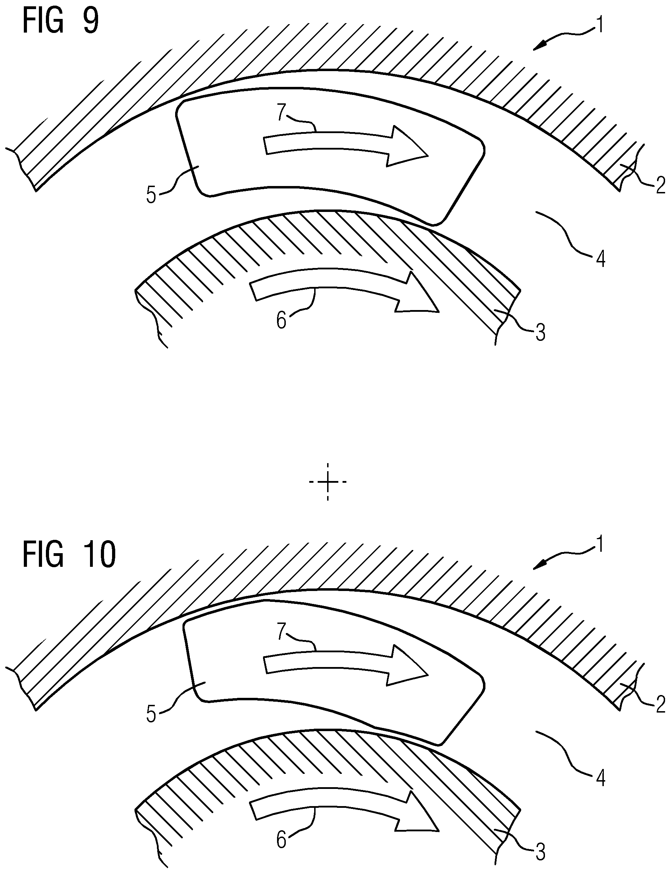

Die Figur 9 zeigt einen Zustand der Lageranordnung 1 während des Betriebes. Dabei kann es vorkommen, dass die Lagersteine 5 auf Grund der während des Betriebes herrschenden Kräfte eine Kippbewegung ausführen. Dies könnte dazu führen, dass Teile des Lagersteins 5 gegen den ersten Lagerkörper 2 oder dem zweiten Lagerkörper 3 stoßen.

Die Figur 10 zeigt hier eine gegenüber der Figur 9 verbesserte Ausführung. Hierbei werden die Teile des Lagersteins 5, die durch das Kippen drohen gegen den ersten Lagerkörper 2 bzw. gegen den zweiten Lagerkörper 3 zu stoßen, abgeflacht, indem ein Teil des Materials aus dem Lagerstein entnommen wird.

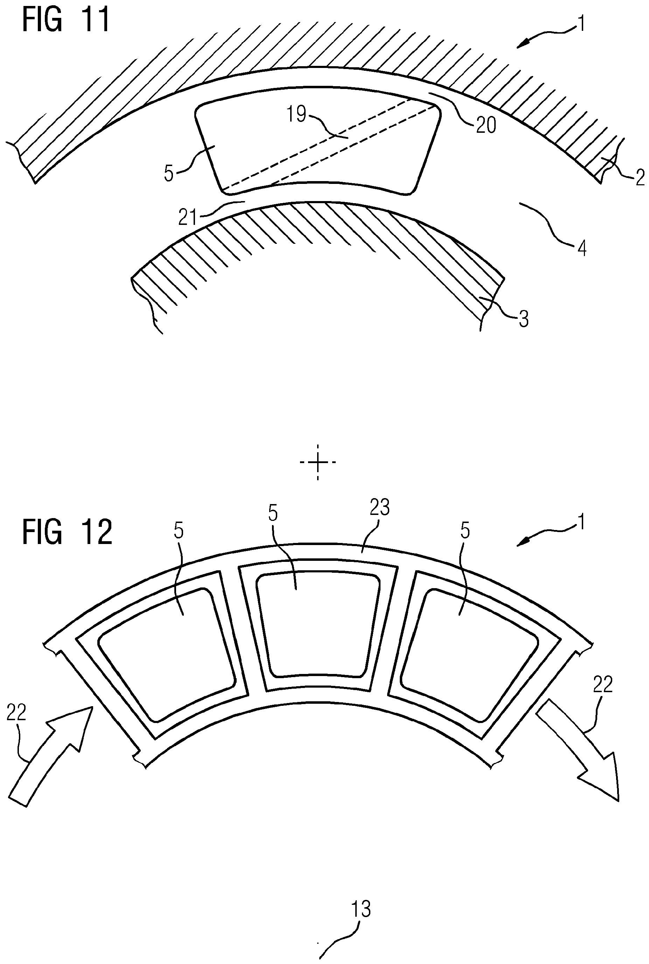

Die Figur 11 zeigt eine weitere Ausführungsform der erfindungsgemäßen Lageranordnung 1.

Die Lagersteine 5 weisen einen Verbindungskanal 19 auf, der eine strömungstechnische Verbindung zwischen einem ersten Spalt 20, der zwischen dem Lagerstein 5 und dem ersten Lagerkörper 2 ausgebildet ist und einen zweiten Spalt 21, der zwischen dem Lagerstein 5 und dem zweiten Lagerkörper 3 ausgebildet ist, herstellt.

Durch diesen als Ölkanal ausgebildete strömungstechnische Verbindung erfolgt ein Ölaustausch zwischen der inneren und der äußeren Gleitfläche.

Ein weiterer Effekt ist, dass die mit Öl durchfluteten Lagersteine 5 durch den Ölfluss gekühlt werden.

Die Figur 12 zeigt eine alternative Ausführungsform der erfindungsgemäßen Lageranordnung 1 in axialer Richtung 13 gesehen, wobei durch die Pfeile 22 die Umfangsrichtung dargestellt wird. Die Lagersteine 5 werden hier in einem Käfig 23 angeordnet, der ein Verschieben der Lagersteine 5 in axialer Richtung 13 verhindert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Lageranordnung (1)
umfassend
einen ersten Lagerkörper (2) und
einen zweiten Lagerkörper (3),
wobei der zweite Lagerkörper (3) relativ zum ersten Lagerkörper (2) verschiebbar angeordnet ist,
wobei zwischen dem ersten Lagerkörper (2) und dem zweiten Lagerkörper (3) ein Lagerspalt (4) ausgebildet ist, wobei in dem Lagerspalt (4) ein Schmiermedium angeordnet ist,
**gekennzeichnet durch** einen Lagerstein (5), der im Lagerspalt (4) bewegbar angeordnet ist,
wobei der Lagerstein (5) derart ausgebildet ist, dass die Bewegung des zweiten Lagerkörpers (3) zu einer Mitbewegung des Lagersteins (5) führt.

2. Lageranordnung (1) nach Anspruch 1,
wobei der zweite Lagerkörper (3) als Welle ausgebildet ist.

3. Lageranordnung (1) nach Anspruch 1,
wobei der Lagerspalt (4) einen rotationssymmetrischen Ringraum bildet.

4. Lageranordnung (1) nach einem der vorhergehenden Ansprüche,
wobei mehrere Lagersteine (5) hintereinander in der Bewegungsrichtung gesehen im Lagerspalt (4) angeordnet sind, wobei die Lagersteine mittels Verbindungselemente (8) zwischen den Lagersteinen (5) miteinander verbunden sind.

5. Lageranordnung (1) nach einem der vorhergehenden Ansprüche,
wobei das Verbindungselement (8) seitlich in axialer Richtung (13) gesehen der Lagersteine (5) angeordnet ist, wobei das Verbindungselement (8) mit den Lagersteinen (5) mittels eines Befestigungsmittels (9) verbunden ist.

6. Lageranordnung (1) nach Anspruch 5,
wobei das Befestigungsmittel (9) als Schraube oder als Stift ausgebildet ist.

7. Lageranordnung (1) nach einem der vorhergehenden Ansprüche,
wobei die Lagersteine (5) berührend hintereinander angeordnet sind.

8. Lageranordnung (1) nach Anspruch 7,
wobei die Lagersteine (5) in der axialen Richtung (13) im Querschnitt gesehen keilförmig ausgebildet sind.

9. Lageranordnung (1) nach einem der vorhergehenden Ansprüche,
wobei die Lagersteine (5) in dem Lagergehäuse (12) derart angeordnet sind, dass ein Verschieben der Lagersteine (5) gegenüber dem Lagergehäuse (12) in axialer Richtung (13) verhindert ist.

10. Lageranordnung (1) nach Anspruch 9,
wobei das Lagergehäuse (12) an den axialen Enden (15) der Lagersteine (5) einen Vorsprung (16) aufweist, mit dem ein axiales Verschieben des Lagersteins (5) verhindert ist.

11. Lageranordnung (1) nach Anspruch 9 oder 10,
wobei die Lagersteine (5) in der Umfangsrichtung gesehen im Querschnitt gesehen eine sphärische oder keilförmige Fläche (17) aufweisen, wobei das Lagergehäuse (12) eine zu der sphärischen oder keilförmigen Fläche (17) komplementäre Fläche aufweist.

12. Lageranordnung (1) nach Anspruch 9 oder 10,
wobei die Lagersteine (5) in der Umfangsrichtung gesehen im Querschnitt gesehen eine Freifläche (18) aufweisen, wobei das Lagergehäuse (12) eine zu der Freifläche (18) komplementäre Fläche aufweist.

13. Lageranordnung (1) nach einem der vorhergehenden Ansprüche,
wobei die Lagersteine (5) einen Verbindungskanal (1) aufweisen, der eine strömungstechnische Verbindung zwischen einem ersten Spalt (20), der zwischen dem Lagerstein (5) und dem ersten Lagerkörper (2) ausgebildet ist und einen zweiten Spalt (21), der zwischen dem Lagerstein (5) und dem zweiten Lagerkörper (3) ausgebildet ist, herstellt.
